# EUROPÄISCHE PATENTSCHRIFT

(11) **EP 1 042 854 B1**
(45) Veröffentlichungstag und Bekanntmachung des Hinweises auf die Patenterteilung: **07.05.2008**
(21) Anmeldenummer: 99926264.5
(22) Anmeldetag: 17.04.1999
(51) Int. Cl.: H02K 5/14, H02K 5/167, H02K 5/15, H02K 1/18, H02K 1/17, H02K 11/04

(54) **KOMMUTATOR-KLEINMOTOR**
COMMUTATOR-SMALL POWER MOTOR
PETIT MOTEUR A COLLECTEUR

(30) Priorität: 28.07.1998 DE 19833802
(43) Veröffentlichungstag der Anmeldung: 11.10.2000
(73) Patentinhaber: ROBERT BOSCH GMBH, 70442 Stuttgart (DE)
(72) Erfinder: FOERSTERA, Josef, D-77830 Bühlertal (DE); NITZSCHE, Hartmut, D-77815 Bühl (DE); MERSCHROTH, Bernhard, D-77933 Ottersweier (DE); PRAHL, Detlef, D-77815 Bühl (DE); HERMANN, Michael, D-77886 Lauf (DE)
(86) Internationale Anmeldenummer: PCT/DE1999/001158
(87) Internationale Veröffentlichungsnummer: WO 2000/007279

(56) Entgegenhaltungen:
- EP-A- 0 168 742
- EP-A- 0 550 706
- EP-A- 0 652 375
- FR-A- 2 237 603
- FR-A- 2 282 182
- FR-A- 2 402 333
- FR-A- 2 539 930
- GB-A- 2 167 608
- US-A- 3 087 081
- US-A- 3 739 205
- US-A- 4 309 062
- US-A- 4 355 253
- US-A- 4 782 261
- US-A- 5 019 741
- US-A- 5 055 728
- US-A- 5 661 357
- PATENT ABSTRACTS OF JAPAN vol. 008, no. 261 (E-281), 30. November 1984 (1984-11-30) & JP 59 132748 A (NIPPON DENSO KK), 30. Juli 1984 (1984-07-30)

## Beschreibung

### Stand der Technik

Die Erfindung geht aus von einem Kommutator-Kleinmotor nach der Gattung des Anspruchs 1.

Ein Kommutator-Kleinmotor nach der Gattung des Anspruchs 1 ist aus der DE 42 15 504 A1 bekannt. Der in dieser Druckschrift beschriebene Kommutator-Kleinmotor dient insbesondere als Gebläsemotor für Kraftfahrzeuge und weist eine in einem Motorgehäuse mittels Rotorlager drehbar gelagerte Rotorwelle auf, auf welcher ein Kommutator und eine mit dem Kommutator elektrisch verbundene Ankerwicklung drehfest angeordnet sind. An dem Kommutator werden in Bürstenführungen geführte Bürsten in schleifender Anlage gehalten. Die Rotorlager sind als Kugellager ausgebildet und werden jeweils von einem Lagerschild an der Rotorwelle fixiert. Die Lagerschilde sind dabei endseitig an dem Motorgehäuse angeordnet und an einem Polring montiert. Der Polring dient der magnetischen Verbindung zweier in den Polring eingesetzter Permanentagnetpole eines den Rotor umgebenen Stators. Der Polring ist von einem zylindrischen Gehäusekörper umschlossen. Die Bürstenführungen sind als separate Bauteile ausgebildet und an einem der Lagerschilde montiert. Für das Andrücken der Bürsten an den Kommutator sind Bürstenandrückfedern vorgesehen.

Dieser bekannte Kommutator-Kleinmotor hat den Nachteil, daß das den Bürstenführungen benachbarte Lagerschild und die Bürstenführungen als separate Bauteile ausgebildet sind, was den Montageaufwand erhöht. Ferner besteht der Nachteil, daß das Motorgehäuse durch die beiden Lagerschilde, den die beiden Lagerschilde verbindenden Polring und den das Polrohr teilweise umgebenden Gehäusekörper gebildet ist und somit aus insgesamt vier Teilen besteht. Der Montageaufwand zum Zusammensetzen des Motorgehäuses ist daher ebenfalls relativ groß.

Aus der DE 196 06 487 A1 geht ein weiterer Kommutator-Kleinmotor in einer modifizierten Bauweise hervor. Der aus dieser Druckschrift bekannte Kommutator-Kleinmotor weist eine Gehäuseaufnahme auf, in welche der Kommutator-Kleinmotor und ein von dem Kommutator-Kleinmotor angetriebenes Lüfterrad einsetzbar sind. Die Gehäuseaufnahme dient gleichzeitig der Luftführung der das Lüfterrad anströmenden Ansaugluft. Das Gehäuse des als Antriebsmotor dienenden Kommutator-Kleinmotors besteht auch bei dieser Ausgestaltung aus einem Polring, einem den Polring umgebenden Gehäusekörper und jeweils einem mit dem Polring verbundenen Lagerschild zur Fixierung der Rotorlager. Die Bürstenführungen sind ebenfalls als separate Bauteile ausgebildet. Es besteht daher auch hier der bereits beschriebene Montageaufwand.

### Vorteile der Erfindung

Der erfindungsgemäße Kommutator-Kleinmotor mit den kennzeichnenden Merkmalen des Anspruchs 1 hat demgegenüber den Vorteil, daß der Fertigungs- und Montageaufwand erheblich reduziert ist. Da das den Bürstenführungen benachbarte Lagerschild mit den Bürstenführungen als einteiliges Bauteil ausgebildet ist und gleichzeitig Bestandteil des Motorgehäuses ist, ergibt sich eine äußerst kompakte und montagefreundliche Bauweise. Es ist nicht mehr notwendig, die Bürstenführungen an dem Lagerschild einerseits und das Lagerschild an dem Polring andererseits

### Vorteile der Erfindung

Der erfindungsgemäße Kommutator-Kleinmotor mit den kennzeichnenden Merkmalen des Anspruchs 1 hat demgegenüber den Vorteil, dass der Fertigungs- und Montageaufwand erheblich reduziert ist. Da das in Bürstenführungen benachbarte Lagerschild mit den Bürstenführungen als einteiliges Bauteil ausgebildet ist und gleichzeitig Bestandteil des Motorgehäuses ist, ergibt sich eine äußerst kompakte und montagefreundliche Bauweise. Es ist nicht mehr notwendig, die Bürstenführungen an dem Lagerschild einerseits und das Lagerschild an dem Polring andererseits zu montieren. Vielmehr sind die Funktionen der Bürstenführung, der Abstützung des Rotorlagers und des Gehäuseabschlusses in einem einzigen Bauteil integriert.

Ein für ein zweites Rotorlager vorgesehenes zweites Lagerschild kann dabei vorteilhaft einteilig an einem zweiten Motorgehäuse-Teil ausgebildet sein. Dabei verschließt das erste Motorgehäuse-Teil vorteilhafterweise das zweite Motorgehäuse-Teil deckelartig. Die beiden Motorgehause-Teile sind vorteilhaft als Kunststoffspritzgussteile herstellbar, wodurch sich geringe Fertigungskosten ergeben. An dem zweiten Motorgehäuse-Teil ist ein im wesentlichen radialer Flansch vorgesehen, an welchem Komponenten einer Steuerelektronik und/oder ein oder mehrere Vorwiderstände angebracht sind.

Erfindungsgemäß ist vorgesehen, dass mit den Bürsten verbundene, erste metallische Anschlüsse radial aus dem ersten Motorgehäuse-Teil herausragen und von dem Flansch des zweiten Motorgehäuse-Teils mit den Komponenten der Steuerelektronik und/oder den Vorwiderständen verbundene zweite metallische Anschlüsse axial in Richtung auf die ersten Anschlüsse hervorragen, so dass die ersten und zweiten Anschlüsse beispielsweise durch Verschweißen, Verlöten und Verpressen miteinander verbindbar sind. Die relativ aufwendige Verdrahtung der Steuerelektronik bzw. der Vorwiderstände mit den Bürsten entfällt.

Durch die in den Unteransprüchen aufgeführten Maßnahmen sind vorteilhafte Weiterbildungen und Verbesserungen des im Anspruch 1 angegebenen Kommutator-Kleinmotors möglich.

Die Rotorlager sind an den zugeordneten Lagerschilden vorzugsweise durch ringförmige Haltefedern arretiert. Diese Haltefedern sind an den zugehörigen Motorgehäuse-Teilen vorzugsweise durch Vernieten oder durch Hinterschnappen von an dem jeweiligen Motorgehäuse-Teil vorgesehenen Vorsprüngen fixiert.

Ein zumindest zwei Permanentmagnetpole miteinander verbindender Polring wird vorteilhaft in das zweite Motorgehäuse-Teil eingepresst, wobei zwischen dem zweiten Motorgehäuse-Teil und dem Polring an dem zweiten Motorgehäuse-Teil angeformte Abstandsrippen vorgesehen sein können. Diese Abstandsrippen können vorteilhaft auch aus einem Elastomer-Werkstoff bestehen, wobei das zweite Motorgehäuse-Teil durch ein Zwei-Komponenten-Spritzgussverfahren hergestellt sein kann und die aus einem Elastomer-Werkstoff bestehenden Abstandsrippen an dem zweiten Motorgehäuse-Teil angespritzt sein können. Bei der Verwendung von Elastomer-Werkstoffen für die Abstandsrippen ergibt sich eine besonders geringe Geräuschemission, da der von dem Polring abgestrahlte Körperschall weitgehend gedämpft wird.

Die axiale Fixierung des Polrings kann entweder durch einen Anschlag an dem ersten Motorgehäuse-Teil oder durch spezielle, an dem zweiten Motorgehäuse-Teil angeformte Rasthaken erfolgen.

Die Permanentmagnetpole können in dem Polring vorteilhaft dadurch fixiert werden, dass ein Federelement die Permanentmagnetpole jeweils gegen einen an dem Polring nach innen ragenden Anschlag drückt. Auf diese Weise werden eventuelle, in der Fertigung unvermeidbare Maßabweichungen ausgeglichen.

Der Polring ist vorteilhaft aus zumindest zwei Schalen zusammengesetzt, die durch bezüglich der Rotorwelle axial verlaufende Spalte voneinander getrennt sind. Die Schalen des Polrings sind im Vergleich zu einem Vollring wesentlich kostengünstiger und einfacher herstellbar. Die Schalen können beispielsweise aus einem Bandmaterial mittels einfacher Werkzeuge hergestellt werden. Die zwischen den Schalen verlaufenden Spalte haben den Vorteil, dass das Ankerquerfeld unterdrückt wird.

Wenn der Kommutator-Kleinmotor ein Lüfterrad eines Gebläses antreibt, ist es vorteilhaft, wenn an dem Lüferrad im

Bereich der Komponenten der Steuerelektronik bzw. der Vorwiderstände zu deren Kühlung Zusatzschaufeln angebracht sind.

Zur Montage des Lüfterrades an der Rotorwelle in dem Motorgehäuse ist es besonders vorteilhaft, wenn das den Bürstenführungen gegenüberliegende zweite Lagerschild eine mittels einer dünnen Membran verschlossene Öffnung aufweist. Beim Aufpressen des Lüfterrades auf die Rotorwelle kann die Rotorwelle auf der gegenüberliegenden Seite abgestützt werden, indem die Rotorwelle unter Zwischenlage der Membran auf einem geeigneten Gegenstück aufliegt. Die dünne, flexible Membran verhindert, daß beim Aufpressen des Lüfterrades auftretende axiale Kräfte auf das Rotorlager oder das Motorgehäuse übertragen werden. Gleichzeitig gewährleistet die dünne Membran gegenüber einer offenen Ausführung einen Verschluß des zweiten Lagerschildes bzw. des zweiten Motorgehäuse-Teils, so daß ein Eindringen von Verunreinigungen in das Motorgehäuse verhindert wird.

### Zeichnung

Ausführungsbeispiele der Erfindung sind in der Zeichnung vereinfacht dargestellt und in der nachfolgenden Beschreibung näher erläutert. Es zeigen:
- Fig. 1: einen erfindungsgemäßen Kommutator-Kleinmotor in einer geschnittenen Darstellung;
- Fig. 2A: einen ausschnittsweisen Schnitt durch einen erfindungsgemäßen Kommutator-Kleinmotor im Bereich eines Rotorlagers;
- Fig. 2B: einen ausschnittsweisen Schnitt durch einen erfindungsgemäßen Kommutator-Kleinmotor im Bereich eines Rotorlagers entsprechend eines gegenüber Fig. 2A modifizierten Ausführungsbeispiels;
- Fig. 3A: einen Schnitt entlang der Linie III-III in Fig. 1;
- Fig. 3B: einen Schnitt entlang der Linie III-III in Fig. 1. eines gegenüber 3A modifizierten Ausführungsbeispiels;
- Fig. 4: einen axialen Schnitt durch das zweite Motorgehäuse-Teil und einem Polring eines erfindungsgemäßen Kommutator-Kleinmotor;
- Fig. 5A: einen Schnitt entlang der Linie VA-VA in Fig. 1;
- Fig. 5B: einen Schnitt entlang der Linie VB-VB in Fig. 5A;
- Fig. 6: einen Schnitt entlang der Linie VA-VA in Fig. 1 eines gegenüber 5A modifizierten Ausführungsbeispiels;
- Fig. 7: eine auszugsweise geschnittene Darstellung eines erfindungsgemäßen Kommutator-Kleinmotors zur Erläuterung der Kontaktierung von Komponenten einer Steuerelektronik oder eines Vorwiderstandes;
- Fig. 8: einen auszugsweisen Schnitt durch einen erfindungsgemäßen Kommutator-Kleinmotor im Bereich eines Rotorlagers; und
- Fig. 9: einen erfindungsgemäßen Kommutator-Kleinmotor in einer geschnittenen Darstellung.

### Beschreibung der Ausführungsbeispiele

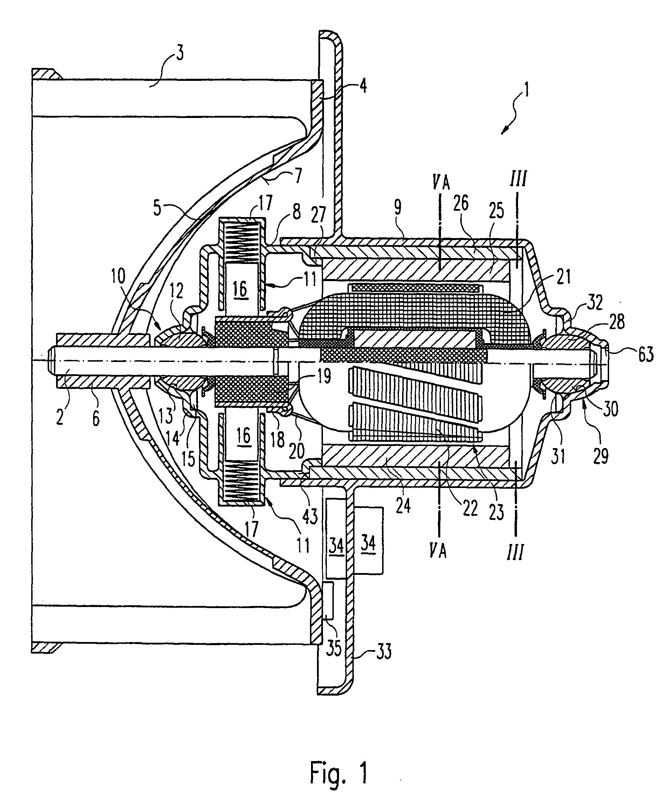

In Fig. 1 ist in einer teilweisen Schnittdarstellung ein Kommutator-Kleinmotor entsprechend einem ersten Ausführungsbeispiel der Erfindung gezeigt. Im dargestellten Ausführungsbeispiel dient der allgemein mit dem Bezugszeichen 1 versehene Kommutator-Kleinmotor als Gebläsemotor für Kraftfahrzeuge, beispielsweise für die Kühlerlüftung oder eine Klimaanlage. Eine drehbar gelagerte Rotorwelle 2 ist daher im Ausführungsbeispiel mit einem Lüfterrad 4 verbunden. An dem gebogenen, topfförmigen Grundkörper 5 des Lüfterrades 4 sind Lüfterflügel 3 angeformt. Der Grundkörper 5 des Lüfterrades 4 weist ein hülsenartiges Verbindungselement 6 auf, das auf die Rotorwelle 2 des Kommutator-Kleinmotors 1 aufgepreßt ist. Das Lüfterrad 4 kann als Kunststoffspritzgußteil kostengünstig hergestellt sein.

Im wesentlichen innerhalb einer dem Kommutator-Kleinmotor 1 zugewandten topfförmigen Ausnehmung 7 des Grundkörpers 5 des Lüfterrades 4 befindet sich ein erstes Motorgehäuse-Teil 8, das zusammen mit einem zweiten Motorgehäuse-Teil 9 ein Motorgehäuse 8, 9 bildet. Das erste Motorgehäuse-Teil 8 und das zweite Motorgehäuse-Teil 9 sind dadurch miteinander verbunden, daß im Ausführungsbeispiel das erste Motorgehäuse-Teil 8 in das zweite Motorgehäuse-Teil 9 axial teilweise überlappend eingeschoben ist, wobei das erste Motorgehäuse-Teil 8 das zweite Motorgehäuse-Teil 9 deckelartig verschließt. Die beiden Motorgehäuse-Teil 8 und 9 können zur Sicherung der Verbindung miteinander verschraubt, vernietet, verklebt, verschweißt oder in anderer Weise kraftschlüssig miteinander verbunden sein. Die beiden Motorgehäuse-Teile 8 und 9 sind vorzugsweise jeweils als Kunststoffspritzgußteil kostengünstig hergestellt.

Erfindungsgemäß bildet das erste Motorgehäuse-Teil 8 gleichzeitig in einteiliger Bauweise ein erstes Lagerschild 10 und Bürstenführungen 11, d. h. das erste Lagerschild 10 und die Bürstenführungen 11 sind als einteiliges Bauteil ausgebildet, das als erstes Motorgehäuse-Teil 8 gleichzeitig Bestandteil des Motorgehäuses 8, 9 ist.

Durch das Lagerschild 10 ist ein erstes Rotorlager 12 fixiert. Dazu weist das Lagerschild 12 eine taschenartige Nische 13 auf, die das im Ausführungsbeispiel als Gleitlager ausgebildete Rotorlager 12 axial einseitig umgibt. An einer Stufe 14 des Lagerschildes 10 ist eine Haltefeder 15 in noch näher zu beschreibender Weise befestigt und umgibt axial die dem Lagerschild 10 abgewandte Seite des ersten Rotorlagers 12.

Die an dem ersten Motorgehäuse-Teil 8 ebenfalls einteilig angeformten Bürstenführungen 11 dienen der radialen Führung von Bürsten 16, die vorzugsweise als Kohlebürsten ausgebildet sind. Die Bürsten 16 werden mittels Bürstenandrückfedern 17 radial an einem Kommutator 18 in Anlage gehalten. Der Kommutator 18 ist mittels eines Isolator 19 drehfest an der Rotorwelle 2 befestigt und über Verbindungsleitungen 20 mit einer ebenfalls drehfest auf der Rotorwelle 2 angeordneten Ankerwicklung 21 verbunden.

Das erste Motorgehäuse-Teil 8 vereint daher drei Funktionen: es bildet einen Lagerschild für das erste Rotorlager 12, es bildet Bürstenführungen 11 für die Bürsten 16 und es ist gleichzeitig ein Teil des Motorgehäuses 8, 9. Durch die Vereinigung von mehreren Funktionen in einem Bauteil ergibt sich eine äußerst kompakte Bauweise und eine montagefreundliche Ausgestaltung. Aus der Ankerwicklung 21 ragen radial Blechpakete 22 heraus, die durch einen Ankerspalt 23 von Permanentmagnetpolen 24 und 25 beabstandet sind. Der magnetische Flußkreis ist durch einen ringförmigen Polring 26 geschlossen, der vorzugsweise in das zweite Motorgehäuse-Teil 9 eingepreßt ist. Um eine radialsymmetrischen Ankerspalt 23 zu erreichen, ist das erste Motorgehäuse-Teil 8 und somit das erste Rotorlager 12 vorzugsweise an dem Polring 26 zentriert, indem das erste Motorgehäuse-Teil 8 einen Zentrierungsansatz 27 aufweist.

An dem dem ersten Rotorlager 12 gegenüberliegenden Ende des Gehäuses 8, 9 ist ein zweites Rotorlager 28 vorgesehen, das im Ausführungsbeispiel ebenfalls als Gleitlager ausgebildet ist. Zur Fixierung des zweiten Rotorlagers 28 weist das zweite Motorgehäuse-Teil 9 in einteiliger Bauweise ein zweites Lagerschild 29 auf. Das zweite Lagerschild 29 weist eine taschenartige Nische 30 auf, welche das zweite Rotorlager 28 axial hälftig umgibt. Ferner ist eine ringförmige Haltefeder 31 vorgesehen, die an einer Stufe 32 des zweiten Lagerschildes 29 befestigt ist und das zweite Rotorlager 28 axial fixiert.

Bei der Montage werden zunächst der Polring 26 und die Permanentmagnetpole 24 und 25 und Rotorlager 28 mit Haltefeder 31an dem zweiten Motorgehäuse-Teil 9 vormontiert und dann der aus der Rotorwelle 2, der Ankerwicklung 21, den Blechpaketen 22, dem Kommutator 18 bestehende Rotor in das zweite Motorgehäuse-Teil 9 eingesetzt. In das Motorgehäuse-Teil 9 wird das Rotorlager 12 mit der Haltefeder 15 vormontiert. Schließlich wird das erste Motorgehäuse-Teil 8 deckelartig aufgesetzt und axial so weit in Richtung auf das zweite Motorgehäuse-Teil 8 eingeschoben, bis das erforderliche axiale Längsspiel für die Rotorlager 12 und 28 eingestellt ist. In dieser Position werden die beiden Motorgehäuse-Teile 8 und 9 beispielsweise durch Verschweißen, Verkleben, Vernieten oder Verschrauben miteinander verbunden, so daß die beiden Lagerschilde 10 und 29 fixiert sind und somit das Axialspiel festgelegt ist.

Das zweite Motorgehäuse-Teil 9 weist vorzugsweise einen sich im wesentlichen radial erstreckenden Flansch 33 auf, der die topfförmige Ausnehmung 7 des Grundkörpers 5 des Lüfterrades 4 zumindest teilweise verschließt. An dem Flansch 33 können Komponenten 34 einer Steuerelektronik und/oder Vorwiderstände montiert sein. Zur Kühlung dieser Komponenten 34 der Steuerelektronik bzw. der Vorwiderstände sind an dem Lüfterrad 4 im Bereich dieser Komponenten 34 der Steuerelektronik bzw. der Vorwiderstände vorzugsweise Zusatzschaufeln 35 zur besseren Kühlung der Steuerelektronik bzw. der Vorwiderstände angebracht.

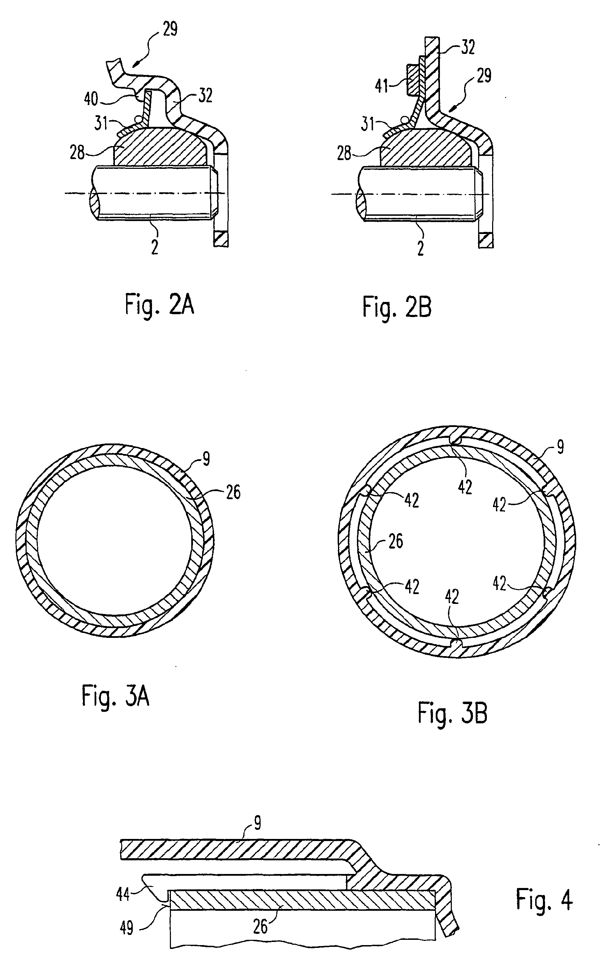

Anhand der Fig. 2 bis 8 werden Details bzw. vorteilhafte Weiterbildungen und Verbesserungen des in Fig. 1 dargestellten Ausführungsbeispiels eines erfindungsgemäßen Kommutator-Kleinmotors beschrieben.

In Fig. 2A und Fig. 2B sind unterschiedliche Befestigungsmöglichkeiten der ringförmigen Haltefeder 31 an dem zweiten Lagerschild 29 dargestellt. Die Fig. 2A und 2B zeigen jeweils eine auszugsweise Schnittdarstellung im Bereich des zweiten Rotorlagers 28. In dem in Fig. 2A dargestellten Ausführungsbeispiel sind an der Stufe 32 des Lagerschilds 29 innenseitige Vorsprünge 40 angeformt. Die ringförmige Haltefeder 31 hinterschnappt diese Vorsprünge 40 und ist so an dem Lagerschild 29 arretiert. Bei dem in Fig. 2B dargestellten Ausführungsbeispiel ist die ringförmige Haltefeder 31 mittels einer Niete 41 vorzugsweise durch Ultraschall-Nieten mit dem zweiten Lagerschild 29 verbunden. Denkbar ist auch, daß die ringförmige Haltefeder 31 scharfkantige Kanten oder Krallen aufweist, die sich in dem vergleichsweise weichen Kunststoff des zweiten Lagerschilds 29 verkrallen.

Selbstverständlich kann die Befestigung der Haltefeder 15 des ersten Rotorlagers 12 an dem ersten Lagerschild 10 in gleicher Weise erfolgen.

Die Fig. 3A und 3B zeigen einen Schnitt entlang der Linie III-III in Fig. 1, jedoch ohne den eingesetzten Rotor. Erkennbar sind das zweite Motorgehäuse-Teil 9 und der Polring 26. Bei beiden in den Fig. 3A und 3B dargestellten Ausführungsbeispielen ist der Polring 26 in das zweite Motorgehäuse-Teil 9 eingepreßt. Bei dem in Fig. 3A dargestellten Ausführungsbeispiel ist der Polring 26 unmittelbar in das zweite Motorgehäuse-Teil 9 so eingepreßt, daß die äußere Oberfläche des Polrings 26 an der inneren Oberfläche des zweiten Motorgehäuse-Teils 9 plan anliegt. Bei dem in Fig. 3B dargestellten Ausführungsbeispiel hingegen, sind an der Innenseite des zweiten Motorgehäuse-Teils 9 Abstandsrippen 42 angeformt, die umfänglich verteilt angeordnet sind. Dadurch ist der Polring 26 von dem zweiten Motorgehäuse-Teil 9 auf Abstand gehalten. Entsprechend ist die Geräuschemission aufgrund einer Entkopplung des Körperschalls verringert. Besonders vorteilhaft sind die Abstandsrippen 42 aus einem Elastomer-Werkstoff, beispielsweise Gummi, ausgebildet. Die Abstandsrippen 42 können dann in einem Zwei-Komponenten-Spritzgußverfahren an das zweite Motorgehäuse-Teil 9 angespritzt werden. Durch die elastische Ausbildung der Abstandsrippen 42 wird die akustische Entkopplung zwischen dem Polring 26 und dem zweiten Motorgehäuse-Teil 9 weiter verbessert, und somit die Geräuschemission weiter verringert.

Zur axialen Fixierung des Polrings 26 in dem Motorgehäuse 8, 9 kann ein in Fig. 1 dargestellter Anschlag 43 dienen. Alternativ ist es auch möglich, entsprechend dem in Fig. 4 dargestellten Ausführungsbeispiel spezielle an dem zweiten Motorgehäuse-Teil 9 angeformte Rasthaken 44 vorzusehen, die eine dem ersten Motorgehäuse-Teil 8 zugewandte Stirnfläche 45 hintergreifen. Die Rasthaken 44 können umfänglich verteilt an dem Polring 9 angreifen.

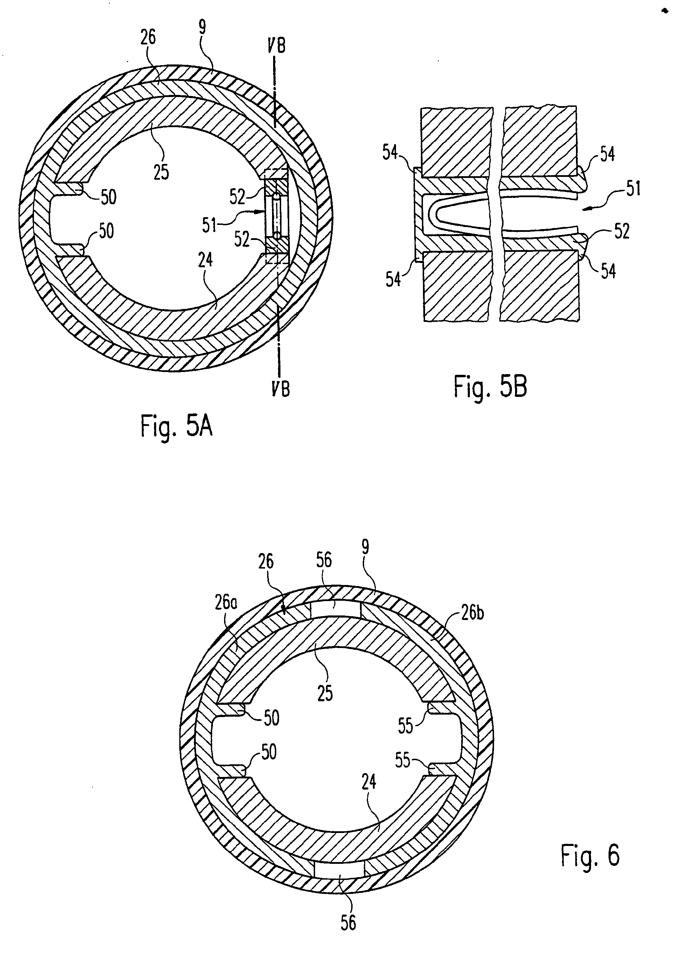

Fig. 5A zeigt einen Schnitt entlang der Linie VA-VA in Fig. 1, jedoch ohne den eingesetzten Rotor, so daß die Blechpakete 22 und die Ankerwicklung 21 in Fig. 5A nicht erkennbar sind. Dargestellt sind das zweite Motorgehäuse-Teil 9, der Polring 26 und die beiden Permanentmagnetpole 24 und 25 des im Ausführungsbeispiel zweipolig ausgebildeten Kommutator-Kleinmotors 1.

Zur Aufnahme der Permanentmagnetpole 24 und 25 weist der Polring 26 an einer Seite jeweils einen Anschlag 50 auf, an welchem die Permanentmagnetpole 24 und 25 einseitig anliegen. Zur Aufspreizung dient ein Federelement 51. Das Federelement 51 ist besser aus Fig. 5B zu erkennen, wobei Fig. 5B einen auszugsweisen Schnitt entlang der Linie VB-VB in Fig. 5A zeigt. Das Federelement 51 besteht im dargestellten Ausführungsbeispiel aus einem flexiblen Bügel 52, der durch eine in den elastischen Bügel 52 eingesetzte Drahtfeder 53 aufspreizbar ist. Auf diese Weise werden die Permanentmagnetpole 24 und 25 radial gegen den Polring 26 gedrückt und fixiert. Zur axialen Fixierung dient ein auf jeder Seite vorgesehener Überstand 54.

Die Drahtfeder 53 und der elastische Bügel 52 können ohne größeren Fertigungsaufwand unmittelbar in der Fertigungslinie hergestellt werden. Die benötigte Anzahl an Einzelteilen ist relativ gering. Der Bügel 52 kann auch direkt an das zweite Motorgehäuse-Teil 9 angespritzt sein.

Fig. 6 zeigt ebenfalls einen Schnitt entlang der Linie VA-VA in Fig. 1 jedoch entsprechend einem modifizierten Ausführungsbeispiel. Im Unterschied zu dem in Fig. 5A dargestellten Ausführungsbeispiel ist der Polring 26 nicht einteilig, rohrförmig ausgebildet, sondern aus zwei Schalen 26a und 26b zusammengesetzt. Die Schalen 26a und 26b können mit wesentlich geringerem Aufwand, beispielsweise aus einem Bandmaterial durch Pressen, hergestellt werden. Dies kann unmittelbar in der Fertigungslinie erfolgen; eine Vorfertigung ist nicht erforderlich.

Vorzugsweise ist zwischen den beiden Schalen 26a und 26b jeweils ein axial verlaufender Spalt 56 vorgesehen. Einerseits können durch die Spalte 56 fertigungsbedingte Maßabweichungen ausgeglichen werden. Andererseits dienen die Spalte 56 zur Unterdrückung des Ankerquerfeldes.

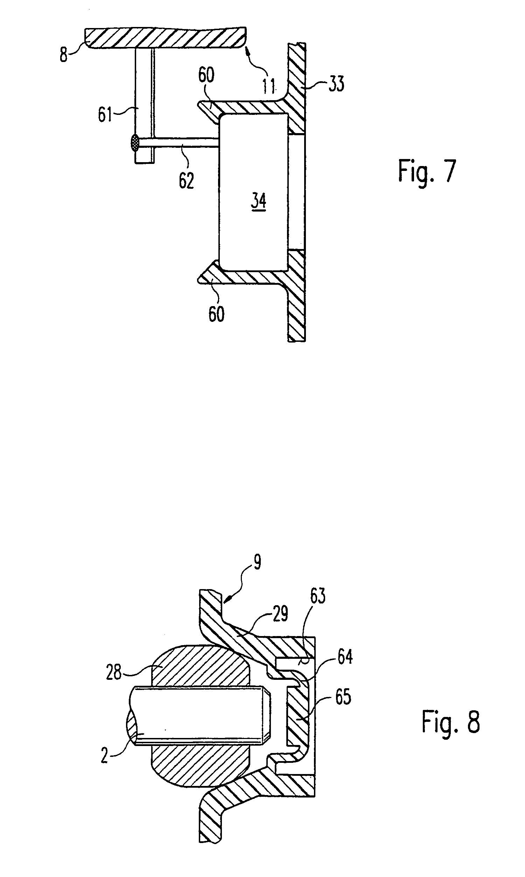

Fig. 7 zeigt den Flansch 33 des zweiten Motorgehäuse-Teils 9 und eine beispielsweise dargestellte Komponente 34 der elektronischen Steuerschaltung. Die elektronische Steuerschaltung dient beispielsweise zur Drehzahleinstellung des Kommutator-Kleinmotors 1. Im in Fig. 7 dargestellten Ausführungsbeispiel sind die Komponenten 34 der elektronischen Steuerschaltung, beispielsweise Widerstände oder Kondensatoren, durch Rastelemente 60 mit dem Flansch 33 verbunden.

Aus den Bürstenführungen 11 des ersten Motorgehäuse-Teils 8 ragen radial erste metallische Anschlüsse 61 heraus, die mit einer beweglichen Litze der zugeordneten Bürste 16 verbunden sind. Zweite metallische Anschlüsse 62 tragen von dem Flansch 33 bezüglich der Rotorwelle 2 axial in Richtung auf die ersten Anschlüsse 61 weg. Die ersten Anschlüsse 61 der Bürstenführungen 11 sind mit den zweiten Anschlüssen 62 der elektronischen Steuerschaltung in einfacher Weise, beispielsweise durch Verlöten, Verschweißen oder Verpressen miteinander elektrisch verbindbar. Eine umständlich Verkabelung ist nicht erforderlich.

Fig. 8 zeigt das an dem zweiten Motorgehäuse-Teil 9 ausgebildete zweite Lagerschild 29 und das zweite Rotorlager 28. Ein in dem Lagerschild 29 zentrisch zu der Rotorwelle 2 ausgebildete Öffnung 63 ist mittels einer flexiblen, dünnen Membran 64 verschlossen, die im Bereich der Rotorwelle 2 zu einem Stempel 65 verdickt ist. Beim Aufpressen des Lüfterrades 4 auf die Rotorwelle 2 ist es erforderlich, das gegenüberliegende Ende der Rotorwelle 2 abzustützen, um zu verhindern, daß die zum Aufpressen erforderlichen Axialkräfte auf das zweite Rotorlager 28, das zweite Motorgehäuse-Teil 9 und die Bauteile des Rotors übertragen werden und diese Bauteile zerstören können.

Bei dem in Fig. 1 dargestellten Ausführungsbeispiel erfolgt diese Abstützung durch ein durch die offene Öffnung 63 hindurchgreifendes Gegenstück. Diese offene Bauweise hat jedoch den Nachteil, daß Verunreinigungen in das Motorgehäuse 8, 9 eindringen können. Bei dem in Fig. 8 dargestellten Ausführungsbeispiel ist die Öffnung 63 durch die Membran 64 verschlossen. Gleichwohl kann ein der Abstützung der Rotorwelle 2 beim Aufpressen des Lüfterrades 4 dienendes Gegenstück unter Zwischenlage der stempelartigen Verdickung 65 der Membran 64 an der Rotorwelle 2 angreifen und diese Abstützen. Durch die flexible, dünne Ausgestaltung der Membran 64 wird eine axiale Kraftübertragung auf das zweite Lagerschild 29 verhindert.

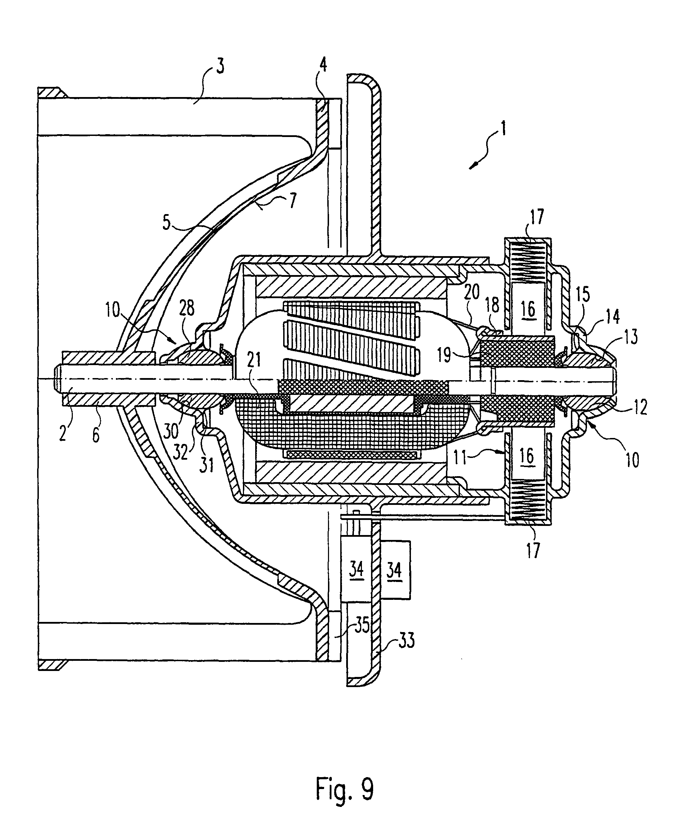

Die Erfindung ist nicht auf die dargestellten Ausführungsbeispiele begrenzt und auch bei Kommutator-Kleinmotoren 1 in anderer Bauweise realisierbar. In Fig. 9 ist beispielsweise ein Kommutator-Kleinmotor 1 gezeigt, bei welchem der Kommutator 18 auf der dem Lüfterrad 4 abgewandten Seite angeordnet ist. Die Zugänglichkeit der Bürsten 16 ist dabei verbessert.

## Patentansprüche

1. Kommutator-Kleinmotor (1), insbesondere Gebläsemotor für Kraftfahrzeuge, mit einer in einem Motorgehäuse (8, 9) in zumindest einem ersten Rotorlager (12) drehbar gelagerten Rotorwelle (2), einem auf der Rotorwelle (2) drehfest angeordneten Kommutator (18), einer auf der Rotorwelle (2) drehfest angeordneten und mit dem Kommutator (18) elektrisch verbundenen Ankerwicklung (21), Bürstenführungen (11) zur Aufnahme von an dem Kommutator (18) in schleifender Anlage gehaltenen Bürsten (16), und zumindest einem ersten Lagerschild (10), das das erste Rotorlager (12) fixiert, wobei das erste Lagerschild (10) und die Bürstenführungen (11) als ein einteiliges Bauteil ausgebildet sind, das als ein erstes Motorgehäuse-Teil (8) Bestandteil des Motorgehäuses (8, 9) ist, wobei die Rotorwelle (2) zusätzlich in einem zweiten Rotorlager (28) gelagert ist, das an einem zweiten Lagerschild (29) fixiert ist, das einteilig an einem zweiten Motorgehäuse-Teil (9) ausgebildet ist, **dadurch gekennzeichnet, dass** das zweite Motorgehäuse-Teil (9) einen im Wesentlichen radialen Flansch (33) aufweist, an welchem Komponenten (34) einer Steuerelektronik und/oder zumindest ein Vorwiderstand angebracht sind, wobei jeweils mit den Bürsten (16) verbundene erste metallische Anschlüsse (61) aus dem ersten Motorgehäuse-Teil (8) radial herausragen und von dem Flansch (33) des zweiten Motorgehäuse-Teils (9) mit den Komponenten (34) der Steuerelektronik und/oder dem Vorwiderstand verbundene zweite metallische Anschlüsse (62) axial in Richtung auf die ersten Anschlüsse (61) vorragen, so dass die ersten und zweiten Anschlüsse (61, 62) miteinander verbindbar sind.

2. Kommutator-Kleinmotor nach Anspruch 1, **dadurch gekennzeichnet, dass** das erste Motorgehäuse-Teil (8) mit dem zweiten Motorgehäuse-Teil (9) zu einem zweiteiligen Motorgehäuse (8, 9) verbindbar ist, indem das erste Motorgehäuse-Teil (8) das zweite Motorgehäuse-Teil (9) deckelartig verschließt.

3. Kommutator-Kleinmotor nach Anspruch 1 oder 2, **dadurch gekennzeichnet, dass** das erste Motorgehäuse-Teil (8) und/oder das zweite Motorgehäuse-Teil (9) als Kunststoffspritzgussteil ausgebildet sind.

4. Kommutator-Kleinmotor nach einem der Ansprüche 1 bis 3, **dadurch gekennzeichnet, dass** das erste Rotorlager (12) an dem ersten Lagerschild (10) und/oder das zweite Rotorlager (28) an dem zweiten Lagerschild (29) durch jeweils eine ringförmige Haltefeder (15, 31) arretiert ist bzw. sind.

5. Kommutator-Kleinmotor nach Anspruch 4, **dadurch gekennzeichnet, dass** die Haltefedern (15, 31) an dem zugehörigen Motorgehäuse-Teil (8, 9) durch Vernieten oder durch Hinterschnappen zumindest eines an dem jeweiligen Motorgehäuse-Teil (8, 9) vorgesehenen Vorsprungs (40) fixiert sind.

6. Kommutator-Kleinmotor nach einem der Ansprüche 1 bis 5, **dadurch gekennzeichnet, dass** in das zweite Motorgehäuse-Teil (9) ein zumindest zwei Permanentmagnetpole (24, 25) miteinander verbindender Polring (26) eingepresst ist.

7. Kommutator-Kleinmotor nach Anspruch 6, **dadurch gekennzeichnet, dass** zwischen dem zweiten Motorgehäuse-Teil (9) und dem Polring (26) an dem zweiten Motorgehäuse-Teil (9) angeformte Abstandsrippen (42) vorgesehen sind.

8. Kommutator-Kleinmotor nach Anspruch 6 oder 7, **dadurch gekennzeichnet, dass** der Polring (26) durch einen Anschlag (43) an dem ersten Motorgehäuse-Teil (8) axial fixiert ist.

9. Kommutator-Kleinmotor nach einem der Ansprüche 6 bis 8, **dadurch gekennzeichnet, dass** der Polring (26) durch an dem zweiten Motorgehäuse-Teil (9) angeformte Rasthaken (44) axial fixiert ist.

10. Kommutator-Kleinmotor nach einem der Ansprüche 6 bis 9, **dadurch gekennzeichnet, dass** zwei benachbarte Permanentmagnetpole (24, 25) in dem Polring (26) dadurch fixiert sind, dass ein Federelement (51) die Permanentmagnetpole (24, 25) jeweils gegen einen an dem Polring (26) nach innen ragenden Anschlag (50) drückt.

11. Kommutator-Kleinmotor nach einem der Ansprüche 6 bis 10, **dadurch gekennzeichnet, dass** der Polring (26) aus zumindest zwei Schalen (26 a, 26 b) zusammengesetzt ist, wobei die Schalen (26 a, 26 b) durch bezüglich der Rotorwelle (2) axial verlaufende Spalte (56) voneinander getrennt sind.

12. Kommutator-Kleinmotor nach Anspruch 1, **dadurch gekennzeichnet, dass** der Kommutator-Kleinmotor (1) ein Lüfterrad (4) antreibt und an dem Lüfterrad (4) im Bereich der Komponenten (34) der Steuerelektronik und/oder des Vorwiderstands zu deren Kühlung Zusatzschaufeln (35) angebracht sind.

13. Kommutator-Kleinmotor nach einem der Ansprüche 1 oder 4, **dadurch gekennzeichnet, dass** das zweite Lagerschild (29) eine mittels einer dünnen Membran (64) verschlossene Öffnung (63) aufweist.

## Claims

1. Low-power commutator motor (1), in particular blower motor for motor vehicles, comprising a rotor shaft (2) which is rotatably mounted in a motor housing (8, 9) in at least one first rotor bearing (12), a commutator (18) which is arranged in a rotationally fixed manner on the rotor shaft (12), an armature winding (21) which is arranged on the rotor shaft (2) in a rotationally fixed manner and is electrically connected to the commutator (18), brush guides (11) for accommodating brushes (16) which are held on the commutator (18) such that they bear against it in a sliding manner, and at least one first bearing plate (10) which fixes the first rotor bearing (12), with the first bearing plate (10) and the brush guides (11) being in the form of an integral assembly which, as a first motor housing part (8), is a constituent part of the motor housing (8, 9), with the rotor shaft (2) additionally being mounted in a second rotor bearing (28) which is fixed to a second bearing plate (29) which is integrally formed on a second motor housing part (9), **characterized in that** the second motor housing part (9) has a substantially radial flange (33) to which components (34) of a control electronics system and/or at least one series resistor are fitted, with first metallic terminals (61) which are connected to the brushes (16) in each case radially protruding out of the first motor housing part (8) and second metallic terminals (62) which are connected to the components (34) of the control electronics system and/or the series resistor projecting from the flange (33) of the second motor housing part (9) axially in the direction of the first terminals (61), so that the first and second terminals (61, 62) can be connected to one another.

2. Low-power commutator motor according to Claim 1, **characterized in that** the first motor housing part (8) can be connected to the second motor housing part (9) to form a two-part motor housing (8, 9) by the first motor housing part (8) closing the second motor housing part (9) in the manner of a lid.

3. Low-power commutator motor according to Claim 1 or 2, **characterized in that** the first motor housing part (8) and/or the second motor housing part (9) are/is in the form of an injection-moulded plastic part.

4. Low-power commutator motor according to one of Claims 1 to 3, **characterized in that** the first rotor bearing (12) is locked to the first bearing plate (10) and/or the second rotor bearing (28) is locked to the second bearing plate (29) by an annular retaining spring (15, 31) in each case.

5. Low-power commutator motor according to Claim 4, **characterized in that** the retaining springs (15, 31) are fixed to the associated motor housing part (8, 9) by riveting or by catching behind at least one projection (40) which is provided on the respective motor housing part (8, 9).

6. Low-power commutator motor according to one of Claims 1 to 5, **characterized in that** a pole ring (26), which connects at least two permanent magnet poles (24, 25) to one another, is pressed into the second motor housing part (9).

7. Low-power commutator motor according to Claim 6, **characterized in that** spacer ribs (42) which are integrally formed on the second motor housing part (9) are provided between the second motor housing part (9) and the pole ring (26).

8. Low-power commutator motor according to Claim 6 or 7, **characterized in that** the pole ring (26) is axially fixed by a stop (43) on the first motor housing part (8).

9. Low-power commutator motor according to one of Claims 6 to 8, **characterized in that** the pole ring (26) is axially fixed by latching hooks (44) which are integrally formed on the second motor housing part (9).

10. Low-power commutator motor according to one of Claims 6 to 9, **characterized in that** two adjacent permanent magnet poles (24, 25) are fixed in the pole ring (26) by a spring element (51) pressing each of the permanent magnet poles (24, 25) against an inwardly protruding stop (50) on the pole ring (26).

11. Low-power commutator motor according to one of Claims 6 to 10, **characterized in that** the pole ring (26) is composed of at least two shells (26a, 26b), with the shells (26a, 26b) being separated from one another by gaps (56) which run axially in relation to the rotor shaft (2).

12. Low-power commutator motor according to Claim 1, **characterized in that** the low-power commutator motor (1) drives a fan impeller (4) and additional blades (35) are fitted to the fan impeller (4) in the region of the components (34) of the control electronics system and/or of the series resistor in order to cool them/it.

13. Low-power commutator motor according to either of Claims 1 and 4, **characterized in that** the second bearing plate (29) has an opening (63) which is closed by means of a thin diaphragm (64).

## Revendications

1. Moteur miniature à collecteur (1), notamment moteur de ventilateur pour un véhicule automobile comportant un arbre de rotor (2) monté à rotation dans au moins un premier palier de rotor (12) dans un boîtier de moteur (8, 9), un collecteur (18) solidaire en rotation de l'arbre de rotor (2), un enroulement d'induit (21) relié électriquement au collecteur (18) et solidaire en rotation de l'arbre de rotor (2), des guides de balais (11) pour recevoir des balais (16) appliqués en appui glissant contre le collecteur (18) et au moins un premier panneau de palier (10) bloquant le premier palier de rotor (12),
le premier panneau de palier (10) et les guides de balais (11) étant réalisés sous la forme d'un composant en une seule pièce, qui fait partie du boîtier de moteur (8, 9) comme première partie de boîtier de moteur (8),
l'arbre de rotor (2) étant monté en outre dans un second palier de rotor (28) bloqué dans un second panneau de palier (29), réalisé en une seule pièce dans une seconde partie de boîtier de moteur (9),
**caractérisé en ce que**
la seconde partie de boîtier de moteur (9) comporte une bride (33) essentiellement radiale, sur laquelle sont fixés des composants (34) d'une électronique de commande et/ou au moins une résistance intermédiaire,
et chaque fois les premiers branchements métalliques (61) reliés aux balais (16) dépassent radialement de la première partie de boîtier de moteur (8) et des seconds branchements métalliques (62) dépassent axialement en direction des premiers branchements (61) de façon que les premiers et les seconds branchements (61, 62) puissent être reliés, ces seconds branchements étant reliés aux composants (34) de l'électronique de commande et/ou de la résistance intermédiaire de la bride (33) de la seconde partie de boîtier de moteur (9).

2. Moteur miniature à collecteur selon la revendication 1,
**caractérisé en ce que**
la première partie de boîtier de moteur (8) peut être reliée à la seconde partie de moteur (9) pour former un boîtier de moteur (8, 9) en deux parties, la première partie de boîtier de moteur (8) fermant la seconde partie de boîtier de moteur (9) à la manière d'un couvercle.

3. Moteur miniature à collecteur selon la revendication 1 ou 2,
**caractérisé en ce que**
la première partie de moteur (8) et/ou la seconde partie de boîtier de moteur (9) sont des pièces en matière plastique injectée.

4. Moteur miniature à collecteur selon l'une des revendications 1 à 3,
**caractérisé en ce que**
le premier palier de rotor (12) est bloqué sur le premier panneau de palier (10) et/ou le second palier de rotor (28) est bloqué sur le second panneau de palier (29) par chaque fois un ressort de retenue (15, 31) annulaire.

5. Moteur miniature à collecteur selon la revendication 4,
**caractérisé en ce que**
les ressorts de retenue (15, 31) sont fixés à la partie de boîtier de moteur (8, 9) correspondant, par rivetage ou par enclipsage d'une partie en saillie (40) prévue sur au moins l'une des parties de moteur (8, 9) respectives.

6. Moteur miniature à collecteur selon l'une des revendications 1 à 5,
**caractérisé en ce que**
la seconde partie de moteur (9) comporte au moins un anneau polaire (26), enfoncé de force, et reliant entre eux au moins deux pôles d'aimant permanents (24, 25).

7. Moteur miniature à collecteur selon la revendication 6,
**caractérisé en ce que**
des nervures d'écartement (42) sont formées sur la seconde partie de boîtier de moteur (9) entre la seconde partie de boîtier (9) et l'anneau polaire (26).

8. Moteur miniature à collecteur selon l'une des revendications 6 ou 7,
**caractérisé en ce que**
l'anneau polaire (26) est bloqué axialement contre la première partie de boîtier de moteur (8) par une butée (43).

9. Moteur miniature à collecteur selon l'une des revendications 6 à 8,
**caractérisé en ce que**
l'anneau polaire (26) est bloqué axialement par des crochets d'enclipsage (44) prévus sur la seconde partie de boîtier de moteur (9).

10. Moteur miniature à collecteur selon l'une des revendications 6 à 9,
**caractérisé en ce que**
deux pôles d'aimants permanents voisins (24, 25) de l'anneau polaire (26) sont fixés **en ce qu'**un élément de ressort (51) pousse les pôles d'aimants permanents (24, 25) chacun contre une butée (50) venant en saillie vers l'intérieur de l'anneau polaire (26).

11. Moteur miniature à collecteur selon l'une des revendications 6 à 10,
**caractérisé en ce que**
l'anneau polaire (26) est composé d'au moins deux coquilles (26a, 26b), ces coquilles étant séparées l'une de l'autre par un intervalle (56) dirigé axialement par rapport à l'arbre de rotor (2).

12. Moteur miniature à collecteur selon la revendication 1,
**caractérisé en ce qu'**
il entraîne un rotor de ventilateur (4) et ce rotor de ventilateur (4) comporte des aubes supplémentaires (35) dans la région des composants (34) de l'électronique de commande et/ou de la résistance intermédiaire pour en assurer le refroidissement.

13. Moteur miniature à collecteur selon l'une des revendications 1 ou 4,
**caractérisé en ce que**
le second panneau de palier (29) comporte une ouverture (63) fermée par au moins une membrane mince (64).
